# FASCICULE DE BREVET EUROPEEN

(11) **EP 0 891 830 B1**
(45) Date de publication et mention de la délivrance du brevet: **31.10.2001**
(21) Numéro de dépôt: 97112336.9
(22) Date de dépôt: 18.07.1997
(51) Int. Cl.: B23B 13/02

(54) **Embarreur pour alimenter une machine-outil, notamment un tour automatique**
Stangenzuführvorrichtung für eine Werkzeugmaschine, insbesondere einen Drehautomaten
Bar feeder for a machine-tool, especially for an automatic lathe

(43) Date de publication de la demande: 20.01.1999
(73) Titulaire: VN SA, 2740 Moutier (CH)
(72) Inventeur: von Niederhäusern, Francis, 2740 Moutier (CH)
(74) Mandataire: Barbeaux, Bernard

(56) Documents cités:
- CH-A- 379 873
- DE-A- 1 777 170
- FR-A- 2 281 806
- US-A- 3 626 792

## Description

La présente invention concerne un embarreur pour alimenter une machine-outil, notamment un tour automatique, en barres de matière à usiner par la machine-outil, l'embarreur comportant :
- un guide formant au moins un canal pour recevoir et guider une barre le long d'un axe de rotation de la barre,
- un ou plusieurs mécanismes de commande du guide,
- une poussette agencée pour se déplacer longitudinalement dans le canal et munie d'une pince tournante pour saisir une extrémité arrière de la barre,
- un dispositif d'avance motorisé, lié à la poussette pour la faire avancer et reculer,
- des moyens de manipulation agencés pour maintenir la barre dans au moins une position d'arrêt, et
- des moyens de commande automatique pourvus de capteurs.

Un embarreur, appelé aussi ravitailleur, est un appareil destiné à fournir de la matière en barre relativement longue à une machine-outil telle qu'un tour automatique, qui va usiner une série de pièces successives à l'extrémité avant de cette barre.

Lorsqu'une pièce est terminée, la machine-outil ou l'embarreur fait avancer la barre en vue de l'usinage de la pièce suivante. Quand la barre devient trop courte pour permettre d'usiner encore une pièce, l'embarreur a pour tâche de retirer la chute, de prélever une nouvelle barre dans un magasin et d'amener celle-ci à la machine pour continuer la production.

On connaît deux catégories principales d'embarreurs. La présente invention peut s'appliquer à ces deux catégories.

La première catégorie comprend les embarreurs à barillet. Le barillet constitue un guide multiple qui contient une série de barres logées dans autant de tubes. La barre en cours de travail est poussée par l'arrière à l'intérieur du tube au moyen d'un poussoir appelé poussette, ayant un embout tournant muni d'une pince qui saisit l'extrémité arrière de la barre. Quand une barre a été consommée, la poussette est retirée en arrière et un mécanisme de commande fait tourner le barillet d'un pas pour présenter une nouvelle barre entre la poussette et la machine-outil.

La deuxième catégorie comprend des embarreurs ayant un guide stationnaire pourvu d'un canal de guidage qu'un mécanisme de commande peut ouvrir latéralement, d'une part pour l'entrée de la barre dans le canal, et d'autre part pour laisser passer le drapeau d'une poussette qui se fixe à l'arrière de la barre et se déplace dans le canal. Le drapeau est une plaque latérale reliant la poussette à un organe d'entraînement linéaire tel qu'une chaîne ou un câble. Des embarreurs de ce genre font l'objet notamment des demandes de brevets EP 0 161 210 (état de la technique conforme au préambule de la revendication 1), 0 311 953, 0 559 586 et 0 600 783.

Les embarreurs actuels de ce genre comportent habituellement un dispositif de commande automatique qui est couplé à la commande de la machine-outil et qui reçoit des informations sur l'état de fonctionnement de l'embarreur à partir d'un groupe de capteurs ou détecteurs comprenant différents interrupteurs et relais. La commande est séquentielle, différentes séquences étant enclenchées par des interrupteurs actionnés par les déplacements de divers organes de l'embarreur. La position de la poussette le long du canal de guidage peut être mesurée à partir de la position de la chaîne ou du câble qui l'entraîne. Par exemple dans le dispositif décrit dans la demande EP 0 600 783, le moteur entraînant la chaîne est équipé d'un capteur de position angulaire pour mesurer la rotation de ce moteur et en déduire la position de la chaîne, de la poussette et de la barre.

Toutefois, le fonctionnement de ces dispositifs de commande connus est souvent insatisfaisant, parce que les interrupteurs ou relais, qui opèrent dans un environnement difficile, présentent parfois des pannes intermittentes qui bloquent le fonctionnement de l'embarreur. Si cette panne n'existe plus lorsque l'on remet en marche l'embarreur, on ne sait pas d'où elle provenait et elle pourra se répéter n'importe quand. Par ailleurs, un réglage fin du fonctionnement est difficile avec de tels moyens de commande.

La présente invention a pour objet un embarreur permettant d'éviter substantiellement les inconvénients précités. Selon un aspect particulier de l'invention, l'embarreur est conçu de façon à comporter des capteurs ou détecteurs qui sont en nombre aussi faible que possible et présentent une grande fiabilité.

Dans ce but, l'invention concerne un embarreur du genre indiqué en préambule, caractérisé en ce qu'il comporte un arbre à cames motorisé, dont les cames actionnent au moins les mécanismes de commande du guide et les moyens de manipulation, et en ce que les capteurs comprennent un premier capteur de position, associé au dispositif d'avance pour indiquer la position axiale de la poussette, et un second capteur de position, associé à l'arbre à cames pour indiquer l'état des fonctions commandées par cet arbre. L'arbre à cames peut être rotatif ou coulissant.

Grâce à ces dispositions, la commande automatique de l'embarreur peut opérer, conjointement avec celle de la machine-outil, simplement sur la base de deux paramètres mesurés par deux capteurs respectifs qui peuvent être d'un type très fiable, en particulier des codeurs angulaires numériques. Le premier capteur, associé au dispositif d'avance, permet de détecter non seulement la position axiale de la poussette et de la barre, mais aussi la présence ou l'absence d'une barre et sa fixation correcte à la poussette, en coopération avec un moyen de blocage de la barre. D'autre part, comme chaque fonction commandée par l'arbre à cames peut correspondre à un secteur angulaire particulier de la rotation de cet arbre (ou de son déplacement linéaire s'il est coulissant), le second capteur associé à cet arbre est capable d'indiquer à chaque instant la position de l'arbre, représentant ainsi l'état de ces fonctions.

D'autres caractéristiques et avantages de la présente invention apparaîtront dans la description suivante d'une forme de réalisation préférée, présentée à titre d'exemple non limitatif en référence aux dessins annexés, dans lesquels :
- la figure 1 est une vue générale schématique en élévation latérale d'un embarreur à guide ouvrant selon l'invention, et
- la figure 2 est une vue en perspective schématique et partielle montrant les principaux composants de l'embarreur qui interviennent dans la présente invention.

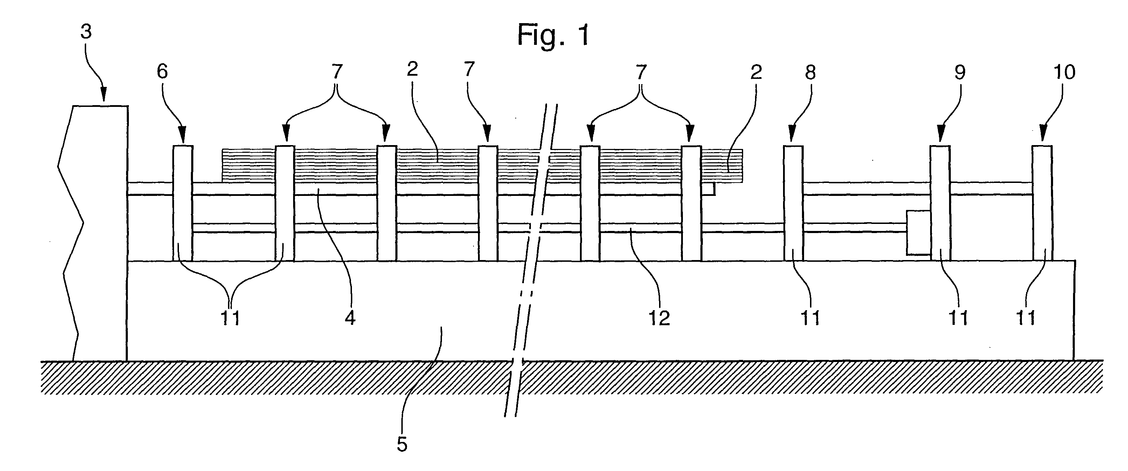

En référence à la figure 1, l'embarreur 1 est destiné à introduire longitudinalement de la matière en barres 2 dans la poupée d'un tour automatique. La barre 2 en cours de travail est logée dans un guide ouvrant 4 formant un canal dans lequel elle peut tourner à grande vitesse. Le guide 4 peut être d'un type connu et ne sera pas décrit en détails ici. Il est subdivisé en plusieurs sections, quatre dans le cas présent, qui peuvent s'ouvrir séparément en fonction de l'avance de la barre, et toutes ensemble pour recevoir une nouvelle barre.

L'embarreur comporte un bâti général 5 supportant une station avant 6, une série de stations intermédiaires 7 et trois stations arrière 8, 9 et 10, chacune des stations 6 à 10 ayant un support transversal 11 monté sur le bâti 5. Les stations intermédiaires 7 portent le guide 4, ainsi qu'un magasin latéral contenant une réserve de barres 2. Un arbre à cames longitudinal 12 est monté parallèlement au guide 4 sur les supports des stations 6 à 8. Comme on le verra plus loin, il commande l'ensemble des mécanismes de l'embarreur, à l'exception du dispositif d'avance de barre, qui a été omis dans la figure 1 afin de clarifier le dessin.

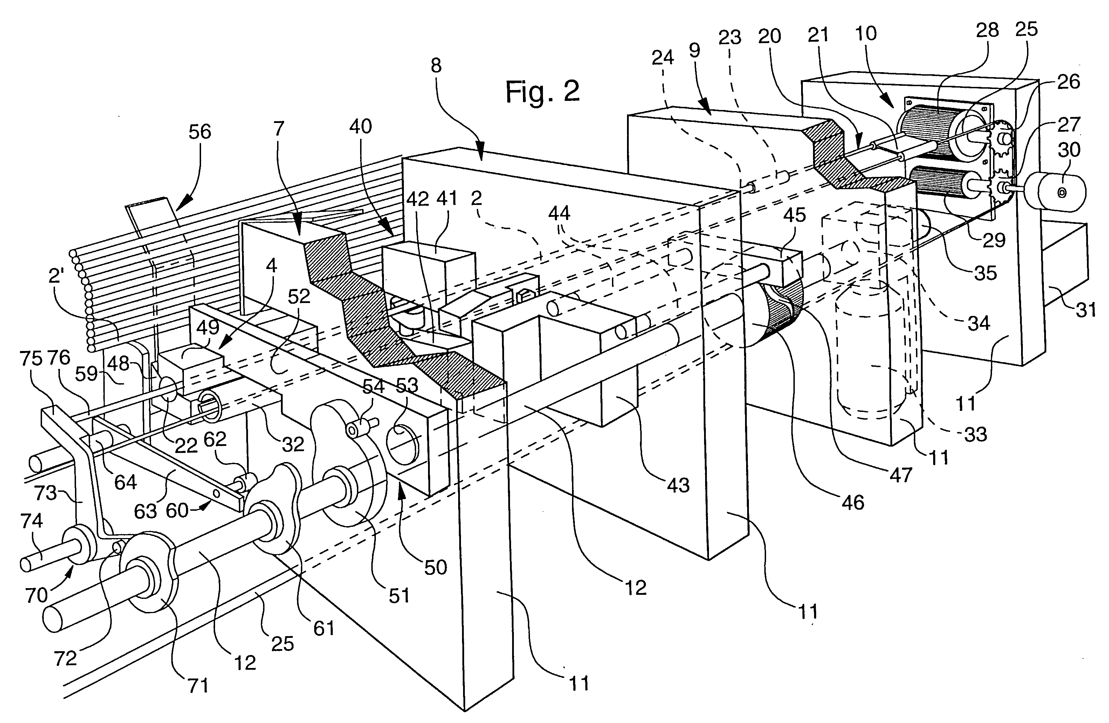

Dans la figure 2, on peut voir l'essentiel du dispositif d'avance, comprenant une poussette 20 à drapeau 21 qui coulisse dans le canal longitudinal 22 du guide 4. De manière connue, l'extrémité avant de la poussette 20 est formée par un embout à pince rotative 23 capable de saisir l'extrémité arrière 24 de la barre 2 et de laisser tourner cette barre tandis que le reste de la poussette 20 ne tourne pas. La pince 23 se ferme d'elle-même et n'a donc pas besoin d'être commandée. A l'extérieur du guide 4, le drapeau 21 est fixé à une chaîne d'entraînement 25 qui forme une boucle sans fin en passant sur des roues dentées, en particulier deux roues 26 et 27 situées dans la station 10 et deux roues de renvoi situées dans la première des stations intermédiaires 7. Le brin supérieur de la chaîne 25 est guidé par un tube 32 ayant une fente pour laisser passer le drapeau 21. La station 10 comprend un moteur électrique bidirectionnel 28 entraînant la chaîne 25 par la roue 26, un palier 29 supportant la roue 27, ainsi qu'un premier capteur angulaire 30 constitué par un codeur absolu multitours qui délivre son signal de sortie à une unité électronique de commande 31 disposée dans la station 10 ou dans une autre station de l'embarreur. Le codeur 30 peut être par exemple du type AG 665 P 31 fabriqué en Allemagne par la société Max Stegmann GmbH, Donaueschingen. Ce codeur présente une résolution de 1024 points par tour sur 64 tours, avec une sortie parallèle en code Gray. Ainsi, il est capable de mesurer avec précision la position axiale sur la poussette 20 sur toute la course de celle-ci. La poussette pourra avancer jusqu'à une position limite à laquelle la longueur du reste de barre qu'elle tient n'est plus suffisante pour permettre l'usinage d'une pièce supplémentaire et constitue donc une chute. Cette position limite est programmée par l'opérateur dans l'unité de commande 31. Cette unité est de préférence une unité "intelligente", programmée pour "apprendre" quelle longueur de barre est consommée par l'usinage de chaque pièce, en calculant la moyenne des avances nettes effectuées pour les premières pièces d'une série.

La station 9 est celle de l'entraînement de l'arbre à cames 12. Elle comporte un moteur électrique 33 qui peut être unidirectionnel, un réducteur à vis sans fin 34 reliant le moteur 33 à l'arbre 12, et un second capteur angulaire 35 couplé à l'arbre 12 et constitué de préférence par un codeur absolu monotour. Ce codeur peut être du type AG 613 XKRP 1024 de la société Stegmann susmentionnée, ayant une résolution de 1024 points par tour et une sortie parallèle en code Gray. Bien entendu, cette sortie est raccordée à l'unité 31.

La station 8 est équipée d'une pince d'extraction 40 destinée à saisir la barre 2 pour la bloquer ou lui imposer des déplacements d'amplitude limitée afin de l'engager dans la pince rotative 23 et de l'en retirer. La pince 40 comporte deux mâchoires 41 et 42 montées sur une base 43 et actionnées par des surfaces de cames longitudinales fixes (non représentées) solidaires du support 11 de la station 8, lorsque la pince 40 est déplacée le long de la barre 2. A cet effet, la base 43 est portée par deux guides 44 qui coulissent dans les supports 11 des stations 8 et 9 et qui sont liés par une traverse 45 s'étendant au-dessus d'une came en forme de cloche 46 de l'arbre à cames 12. Cette came présente sur son pourtour une rainure sinueuse 47 dans laquelle est engagé un suiveur (non représenté) de la traverse 45. Ainsi, dans certains secteurs de la rotation de la came 46, la pince 40 se déplace axialement avec une amplitude imposée par la rainure 47, en se fermant et s'ouvrant sur une partie prédéterminée de sa course. Comme la pince 40 est entraînée positivement dans les deux sens par la came 46, l'arbre à cames peut lui appliquer des forces axiales relativement grandes pour l'extraction de la barre. Pour absorber ces forces, la station 8 comporte un mécanisme (non représenté) de blocage de la poussette par son drapeau 21. Ce mécanisme est aussi actionné par une came de l'arbre 12, placée derrière la came 46.

Chaque section du guide 4 constitue un palier de guidage composé d'un élément inférieur fixe 48 et d'un couvercle mobile 49. Chaque station intermédiaire 7 comporte un mécanisme de commande de palier 50, comprenant une came 51 fixée sur l'arbre 12, un levier 52 fixé au couvercle 49 et monté sur un pivot horizontal 53, et un galet suiveur 54 coopérant avec la came 51 pour soulever le levier et le couvercle 49. En fait, chaque couvercle 49 s'étend à travers deux stations 7 et est actionné par leurs deux mécanismes de commande de palier 50. Le profil de chaque came 51 permet d'ouvrir le canal 22 dans une faible mesure, pour laisser passer le drapeau 21, et dans une plus grande mesure une fois par tour de l'arbre 12 pour admettre dans le canal une nouvelle barre 2' provenant du magasin 56.

Au moins deux sélecteurs 59 sont disposés au-dessous du magasin de barres 56 et servent de poussoirs pour amener transversalement la nouvelle barre dans le canal 22. Ils font partie d'un mécanisme d'amenée 60 comportant une came 61 suivie par un galet 62 monté sur un levier 63. Celui-ci est fixé à un arbre de sélection pivotant 64 qui porte les sélecteurs 59.

Enfin, la station avant 6 comporte un mécanisme d'arrêt de barre 70 actionné par une came 71 de l'arbre 12. Cette came est suivie par un galet 72 d'un levier d'arrêt 73 monté sur un pivot horizontal 74. Il est ainsi possible d'amener un arrêt 75 formé par l'extrémité du levier 73 devant la sortie du canal 22, pour arrêter l'extrémité avant 76 de la barre à usiner 2 afin de définir une position initiale précise, à partir de laquelle les déplacements de la barre seront mesurés au moyen du capteur 30.

Il faut noter que le canal 22 du guide 4 a un diamètre assez grand pour recevoir des barres 2 de différents diamètres. Afin de maintenir correctement la barre derrière la poupée du tour 3, l'embarreur comporte de préférence un guide avant ouvrant (non représenté), commandé par une came spécifique de l'arbre 12 et pourvu d'une garniture intérieure amovible en plastique qui est adaptée au diamètre des barres à usiner. Ce guide avant se trouve entre le mécanisme d'arrêt 70 et le tour 3.

Le cycle de fonctionnement normal de l'embarreur 1 se déroule sur un tour complet de l'arbre à cames 12 et comprend des étapes successives dont chacune correspond à un secteur angulaire respectif de la rotation de l'arbre. Dans certains de ces secteurs, l'arbre peut prendre différentes positions pour actionner de manière appropriée les mécanismes qu'il commande, en combinaison avec les déplacements de la poussette 20. Grâce au capteur angulaire 35, l'unité de commande 31 connaît à chaque instant la position de l'arbre à cames, donc aussi celle de tous les mécanismes susmentionnés. Les étapes du cycle sont les suivantes, dès qu'une nouvelle barre a été placée contre l'arrêt 75.
1. Dégagement de l'arrêt 75.
2. Arrêt de l'arbre à cames 12. Début d'avance lente de la poussette 20 pour mettre la barre 2 dans le tour 3 à une position initiale programmée pour commencer la production. Saisie de la barre par une pince de la poupée du tour et usinage des pièces successives dans le tour, avec avance de la barre par la poussette ou par la poupée, chaque fois qu'une pièce terminée a été détachée de la barre, ces opérations se répétant jusqu'à l'étape 11.
3. Léger soulèvement du quatrième couvercle 49 pour la passage du drapeau 21.
4. Arrêt de l'arbre à cames.
5. Léger soulèvement du troisième couvercle 49.
6. Arrêt de l'arbre à cames.
7. Léger soulèvement du deuxième couvercle 49.
8. Arrêt de l'arbre à cames.
9. Léger soulèvement du premier couvercle 49.
10. Arrêt de l'arbre à cames.
11. Ouverture du guide avant pour laisser passer la poussette. Usinage des dernières pièces jusqu'à la position limite de la poussette.
12. Arrêt de l'arbre à cames. Retour de la poussette avec la chute de barre.
13. Serrage de la pince d'extraction 40 sur la chute de barre.
14. Arrêt de l'arbre à cames. Essai d'avance de la poussette pour vérifier que la chute est présente et bloquée par la pince 40.
15. Blocage de la poussette. Avance de la pince 40 serrée pour arracher la chute de la pince tournante 23 de la poussette. Suite de l'avance de la pince 40 pour l'ouvrir et lâcher la chute.
16. Deuxième serrage de la pince 40.
17. Arrêt de l'arbre à cames. Essai d'avance de la poussette pour vérifier l'éjection de la chute.
18. Réouverture de la pince 40. Soulèvement ample des couvercles 49 pour admettre une nouvelle barre dans le guide 4. Amenée de cette barre par les sélecteurs 59.
19. Arrêt de l'arbre à cames.
20. Fermeture des couvercles. Mise en place de l'arrêt 75. Blocage de la poussette. Recul de la pince 40 pour serrer la barre et la forcer à entrer dans la pince tournante 23. Déblocage de la poussette. Retour de la pince 40 pour la rouvrir.
21. Arrêt de l'arbre à cames. Avance de la barre pour l'appuyer contre l'arrêt 75, vérifier ainsi sa présence et remettre à zéro le décompte des avances de barre. Fin du cycle.

La description qui précède montre que tout le fonctionnement de l'embarreur 1 est contrôlé à l'aide de seulement deux capteurs 30 et 35, qui sont d'un genre particulièrement fiable et précis. De plus, l'emploi de ces capteurs permet de vérifier le bon déroulement de plusieurs opérations susceptibles de ne pas réussir, et donc de mettre en oeuvre automatiquement des procédures correctives, ainsi que des alarmes s'il le faut. L'embarreur n'utilise aucun interrupteur actionné par des déplacements, aucun capteur de présence ni aucun capteur de force. Tous les tests faisant intervenir une force sont transformés en tests de déplacement de la poussette.

En outre, on notera que l'unité de commande "intelligente" 31 peut, d'après les indications du premier capteur 30, mesurer le total des jeux axiaux existant dans le dispositif d'avance, en particulier dans la chaîne 25 et entre celle-ci et la pince tournante 23, en effectuant un mouvement de va-et-vient pendant que la barre 2 est bloquée. Ensuite elle tient compte de cette mesure pour calculer avec précision chaque position axiale de la barre. Lorsque le tour 3 est d'un type à poupée mobile, faisant avancer et reculer la barre pendant l'usinage d'une pièce, on peut ainsi ménager un grand jeu axial, supérieur à la longueur à usiner de la pièce, entre la poussette et la chaîne afin que cette dernière ne soit pas entraînée par les mouvements de la poupée pendant l'usinage.

Le fait que le premier capteur 30 est un codeur absolu, c'est-à-dire indiquant toujours un angle par rapport à une position zéro, a l'avantage de faire connaître à l'unité de commande 31 la position de la poussette 20 en tout temps, indépendamment de la longueur de la barre 2. On pourrait toutefois remplacer ce codeur par un codeur incrémentiel non absolu et programmer l'embarreur pour effectuer une manoeuvre d'initialisation en mettant la poussette contre un arrêt qui définit sa position zéro. Mais, pour des raisons de fiabilité, cette manoeuvre devrait être répétée périodiquement.

Il faut noter aussi que l'arbre à cames rotatif 12 décrit ci-dessus pourrait être remplacé par un arbre à cames coulissant remplissant les mêmes fonctions et entraîné longitudinalement par un mécanisme à pignon et crémaillère ou un mécanisme analogue. Dans ce cas, le second capteur serait de préférence un codeur angulaire absolu multitours, couplé au pignon de la crémaillère pour être associé à l'arbre à cames.

## Revendications

1. Embarreur (1) pour alimenter une machine-outil (3), notamment un tour automatique, en barres de matière à usiner par la machine-outil, l'embarreur comportant :
- un guide (4), formant au moins un canal (22) pour recevoir et guider une barre (2) le long d'un axe de rotation de la barre,
- un ou plusieurs mécanismes (50) de commande du guide,
- une poussette (20) agencée pour se déplacer longitudinalement dans le canal et munie d'une pince tournante (23) pour saisir une extrémité arrière de la barre,
- un dispositif d'avance motorisé (25-29), lié à la poussette pour la faire avancer et reculer,
- des moyens de manipulation (40, 70) agencés pour maintenir la barre dans au moins une position d'arrêt, et
- des moyens de commande automatique (30, 31, 35) pourvus de capteurs,
**caractérisé en ce qu'**il comporte un arbre à cames (12) motorisé, dont les cames actionnent au moins les mécanismes (50) de commande du guide et les moyens de manipulation (40, 70), et **en ce que** les capteurs comprennent un premier capteur de position (30), associé au dispositif d'avance pour indiquer la position axiale de la poussette (20), et un second capteur (35) de position, associé à l'arbre à cames (12) pour indiquer l'état des fonctions commandées par cet arbre.

2. Embarreur selon la revendication 1, **caractérisé en ce que** l'arbre à cames (12) est rotatif et **en ce que** le second capteur (35) est un codeur angulaire numérique absolu.

3. Embarreur selon la revendication 1, **caractérisé en ce que** l'arbre à cames est coulissant et **en ce que** le second capteur est un codeur angulaire numérique absolu associé à cet arbre par l'intermédiaire d'un mécanisme à pignon et crémaillère ou d'un mécanisme analogue.

4. Embarreur selon l'une des revendications précédentes, **caractérisé en ce que** le dispositif d'avance comporte un organe souple d'entraînement (25), notamment une chaîne ou un câble, qui est lié à la poussette (20) et associé au premier capteur (30), et **en ce que** le premier capteur (30) est un codeur angulaire numérique entraîné par une roue (27) sur laquelle passe l'organe souple d'entraînement (25).

5. Embarreur selon la revendication 4, **caractérisé en ce que** le premier capteur (30) est un codeur absolu multitours.

6. Embarreur selon l'une des revendications 1 à 5, **caractérisé en ce que** le guide comporte un barillet rotatif comportant sur son pourtour une série de canaux de guidage, son mécanisme de commande étant agencé pour faire tourner la barillet.

7. Embarreur selon l'une des revendications 1 à 5, **caractérisé en ce que** le guide est un guide ouvrant (4), son mécanisme de commande étant agencé pour l'ouvrir et le fermer.

8. Embarreur selon l'une des revendications précédentes, **caractérisé en ce que** les moyens de manipulation actionnés par l'arbre à cames (12) comprennent un mécanisme d'arrêt de barre (70) agencé pour placer un arrêt (75) devant une extrémité avant (76) de la barre.

9. Embarreur selon la revendication 8, **caractérisé en ce que** le guide comporte en outre un guide avant ouvrant, placé entre ledit arrêt (75) et la machine-outil (3) et commandé par l'arbre à cames (12).

10. Embarreur selon l'une des revendications précédentes, **caractérisé en ce que** les moyens de manipulation actionnés par l'arbre à cames (12) comprennent une pince d'extraction (40) agencée pour être serrée sur la barre et déplacée axialement.

11. Embarreur selon la revendication 10, **caractérisé en ce que** la pince d'extraction (40) comporte une base coulissante (43) entraînée parallèlement à la barre (2) par une came (46) de l'arbre à cames, et des mâchoires (41, 42) montées sur la base (43) et actionnées par coopération avec une came fixe sous l'effet du déplacement de la base, pour saisir la barre.

12. Embarreur selon la revendication 10, **caractérisé en ce que** les moyens de manipulation actionnés par l'arbre à cames (12) comprennent un mécanisme de blocage de la poussette (20), susceptible d'agir pendant un déplacement de la pince d'extraction (40).

13. Embarreur selon la revendication 7, **caractérisé en ce que** les moyens de manipulation actionnés par l'arbre à cames (12) comprennent un mécanisme d'amenée (60) agencé pour amener une barre (2) d'un magasin (56) au canal (22) du guide (4) lorsque celui-ci est ouvert.

## Patentansprüche

1. Stangenschieber (1) zum Beschicken einer Werkzeugmaschine (3), insbesondere einer automatischen Drehmaschine, mit Stangen aus durch die Werkzeugmaschine zu bearbeitenden Material, wobei der Stangenschieber umfaßt:
- eine Führung (4), die wenigstens einen Kanal (22) zum Aufnehmen und Führen einer Stange (2) längs einer Drehachse der Stange bildet,
- einen oder mehrere Mechanismen (50) zum Steuern der Führung,
- einen Stößel (20), der so beschaffen ist, daß er sich in Längsrichtung in dem Kanal bewegen kann, und mit einer Drehzange (23) versehen ist, um ein hinteres Ende der Stange zu ergreifen,
- eine Motorvorschubvorrichtung (25-29), die mit dem Stößel verbunden ist, um ihn vorwärts zu bewegen und zurückzuschieben,
- Betätigungsmittel (40, 70), die so beschaffen sind, daß sie die Stange in wenigstens einer Ruhestellung halten, und
- automatische Steuermittel (30, 31, 35), die mit Sensoren versehen sind,
**dadurch gekennzeichnet, daß** er eine angetriebene Nockenwelle (12) aufweist, deren Nocken wenigstens die Führungssteuerungsmechanismen (50) und die Betätigungsmittel (40, 70) betätigen, und daß die Sensoren einen ersten Positionssensor (30), der der Vorschubvorrichtung zugeordnet ist, um die axiale Position des Stößels (20) anzugeben, und einen zweiten Positionssensor (35), der der Nockenwelle (12) zugeordnet ist, um den Zustand der von dieser Welle gesteuerten Funktionen anzugeben, umfassen.

2. Stangenschieber nach Anspruch 1, **dadurch gekennzeichnet, daß** die Nockenwelle (12) drehbar ist und daß der zweite Sensor (35) ein numerischer Absolutwinkelcodierer ist.

3. Stangenschieber nach Anspruch 1, **dadurch gekennzeichnet, daß** die Nockenwelle gleitend ist und daß der zweite Sensor ein numerischer Absolutwinkelcodierer ist, der dieser Welle über einen Ritzel/Zahnstangen-Mechanismus oder einen ähnlichen Mechanismus zugeordnet ist.

4. Stangenschieber nach einem vorhergehenden Ansprüche, **dadurch gekennzeichnet, daß** die Vorschubvorrichtung ein elastisches Antriebsorgan (25), insbesondere eine Kette oder ein Seil, umfaßt, die bzw. das mit dem Stößel (20) verbunden ist und dem ersten Sensor (30) zugeordnet ist, und daß der erste Sensor (30) ein numerischer Winkelcodierer ist, der von einem Rad (27) angetrieben wird, über das sich das elastische Antriebsorgan (25) bewegt.

5. Stangenschieber nach Anspruch 4, **dadurch gekennzeichnet, daß** der erste Sensor (30) ein Absolut-Mehrfachumdrehungscodierer ist.

6. Stangenschieber nach einem der Ansprüche 1 bis 5, **dadurch gekennzeichnet, daß** die Führung eine Drehwalze enthält, die an ihrem Umfang eine Reihe von Führungskanälen aufweist, wobei ihr Steuermechanismus so beschaffen ist, daß er die Walze dreht.

7. Stangenschieber nach einem der Ansprüche 1 bis 5, **dadurch gekennzeichnet, daß** die Führung eine offene Führung (4) ist, wobei ihr Steuermechanismus so beschaffen ist, daß er sie öffnet und schließt.

8. Stangenschieber nach einem der vorhergehenden Ansprüche, **dadurch gekennzeichnet, daß** die von der Nockenwelle (12) betätigten Betätigungsmittel einen Stangen-Anhaltemechanismus (70) umfassen, der so beschaffen ist, daß er vor einem vorderen Ende (76) der Stange einen Anschlag (75) setzt.

9. Stangenschieber nach Anspruch 8, **dadurch gekennzeichnet, daß** die Führung außerdem eine offene vordere Führung umfaßt, die zwischen dem Anschlag (75) und der Werkzeugmaschine (3) angeordnet ist und durch die Nockenwelle (12) gesteuert wird.

10. Stangenschieber nach einem der vorhergehenden Ansprüche, **dadurch gekennzeichnet, daß** die von der Nockenwelle (12) betätigten Betätigungsmittel eine Entnahmezange (40) umfassen, die so beschaffen ist, daß sie an der Stange angreifen und axial bewegt werden kann.

11. Stangenschieber nach Anspruch 10, **dadurch gekennzeichnet, daß** die Entnahmezange (40) eine Gleitbasis (43), die parallel zur Stange (2) durch einen Nocken (46) der Nockenwelle angetrieben wird, und Klemmbacken (41, 42) umfaßt, die an der Basis (43) angebracht sind und durch Zusammenwirken mit einem festen Nocken unter der Wirkung der Verschiebung der Basis betätigt werden, um die Stange zu ergreifen.

12. Stangenschieber nach Anspruch 10, **dadurch gekennzeichnet, daß** die Betätigungsmittel, die von der Nockenwelle (12) betätigt werden, einen Mechanismus (20) zum Blockieren des Stößels umfassen, der während einer Bewegung der Entnahmezange (40) wirken kann.

13. Stangenschieber nach Anspruch 7, **dadurch gekennzeichnet, daß** die Betätigungsmittel, die von der Nockenwelle (12) betätigt werden, einen Zuführmechanismus (60) umfassen, der so beschaffen ist, daß er eine Stange (2) von einem Lager (56) zum Kanal (22) der Führung (4) befördern kann, wenn diese offen ist.

## Claims

1. Bar feeder (1) for feeding a machine tool (3), in particular an automatic lathe, with bars of material to be machined by the machine tool, the bar feeder including :
- a guide (4) forming at least one channel (22) for accommodating and guiding a bar (2) along an axis of rotation of the bar;
- one or more guide control mechanisms (50);
- a pusher (20) arranged to move longitudinally in the channel and fitted with a rotating clamp (23) for gripping a rear end of the bar;
- a motorized feed device (25-29), linked to the pusher to move it forwards and backwards;
- manipulation means (40, 70) arranged to hold the bar in at least one stop position, and
- automatic control means (30, 31, 35) provided with sensors,
**characterized in that** it includes a motorized camshaft (12), whose cams actuate at least the guide control mechanisms (50) and the manipulation means (40, 70), and **in that** the sensors include a first position sensor (30), associated with the feed device for indicating the axial position of the pusher (20), and a second position sensor (35), associated with the camshaft (12) for indicating the state of the functions controlled by said shaft.

2. Bar feeder according to claim 1, **characterized in that** the camshaft (12) is rotating and **in that** the second sensor (35) is an absolute digital angular encoder.

3. Bar feeder according to claim 1, **characterized in that** the camshaft is sliding and **in that** the second sensor is an absolute digital angular encoder associated with said shaft via a pinion and rack mechanism or a similar mechanism.

4. Bar feeder according to any of the preceding claims, **characterized in that** the feed device includes a flexible driving member (25), in particular a chain or a cable, which is connected to the pusher (20) and associated with the first sensor (30), and **in that** the first sensor (30) is a digital angular encoder driven by a wheel (27) over which the flexible driving member (25) passes.

5. Bar feeder according to claim 4, **characterized in that** the first sensor (30) is an absolute multiturn angle encoder.

6. Bar feeder according to any of claims 1 to 5, **characterized in that** the guide includes a revolving magazine including on its periphery a series of guide channels, its control mechanism being arranged to cause the magazine to rotate.

7. Bar feeder according to any of claims 1 to 5, **characterized in that** the guide is an opening guide (4), its control mechanism being arranged to open and close it.

8. Bar feeder according to any of the preceding claims, **characterized in that** the manipulation means actuated by the camshaft (12) include a bar stop mechanism (70) arranged to place a stop (75) in front of a front end (76) of the bar.

9. Bar feeder according to claim 8, **characterized in that** the guide further includes a front opening guide, placed between said stop (75) and the machine tool (3) and controlled by the camshaft (12).

10. Bar feeder according to any of the preceding claims, **characterized in that** the manipulation means actuated by the camshaft (12) include an extraction clamp (40) arranged to be gripped on the bar and moved axially.

11. Bar feeder according to claim 10, **characterized in that** the extraction clamp (40) includes a sliding base (43) driven parallel to the bar (2) by a cam (46) of the camshaft, and jaws (41, 42) mounted on the base (43) and actuated by co-operation with a fixed cam by the effect of the movement of the base, to grip the bar.

12. Bar feeder according to claim 10, **characterized in that** the manipulation means actuated by the camshaft (12) include a mechanism for blocking the pusher (20), capable of acting during movement of the extraction clamp (40).

13. Bar feeder according to claim 7, **characterized in that** the manipulation means actuated by the camshaft (12) include a feed mechanism (60) arranged to feed a bar (2) from a magazine (56) to the channel (22) of the guide (4) when the latter is open.
